# EUROPEAN PATENT APPLICATION

(11) **EP 1 788 053 A2**
(43) Date of publication of application: **23.05.2007**
(21) Application number: 06024013.2
(22) Date of filing: 20.11.2006
(51) Int. Cl.: C09J 7/02

(54) **Printable synthetic foil**

(30) Priority: 18.11.2005 NL 1030460
(71) Applicant: MULTIFOIL B.V., 3525 BB Utrecht (NL)
(72) Inventor: Hooft, Johannes Wilhelmus Gerardus, 4142 AV Hagenstein (NL)
(74) Representative: Jilderda, Anne Ayolt

(57) **Abstract**

A printable synthetic foil (1) comprises a layer for printing (2) for receiving a printing (3), and adhesive means (6) for adhesion to a surface. The adhesive means (6) are separated by a barrier layer (5) from the printable layer (2). The barrier layer (5) forms an effective barrier for possible solvents from a printing agent used for printing and possibly entrained softeners from the printable layer. These are thus prevented from being able to penetrate into the adhesive means (6). The properties of the adhesive means (6) hereby remain unaffected.

## Description

The present invention relates to a printable synthetic foil comprising a layer for printing and with adhesive means on a reverse side for an optionally permanent adhesion to a surface.

An example of such a printable synthetic foil is known from European patent application 1 477 319. The synthetic foil described therein provides a sheet of PVC foil for printing, with a glue layer as adhesive means on a reverse side thereof. The synthetic foil can be adhered to a surface relatively easily by means of this glue layer.

This known printable synthetic foil has the drawback that, when the foil is printed using printing inks, an adhesive used in the glue layer dissolves due to solvents in the printing inks. The synthetic foil can hereby come loose from the surface. In addition, the solvents can release softeners which may be present from the synthetic foil and transport them to the glue layer, wherein the softeners have an adverse effect on the properties of the glue layer. In particular the glue layer can herein soften such that cohesion breakage can occur during removal from a surface, whereby adhesive traces remain on the surface during removal and a top layer of the surface is possibly affected.

The present invention has for its object, among others, to provide a synthetic foil of the type stated in the preamble which protects the adhesive means from being affected as a result of a printing process.

In order to achieve the intended object a synthetic foil of the type stated in the preamble has the feature according to the invention that a barrier layer is provided between the layer for printing and the adhesive means, wherein the barrier layer comprises a polymer layer chosen from a group of a polyester layer, a polyamide layer, a polyethylene layer and a polypropylene layer. Such a barrier layer forms an effective barrier for possibly advancing solvents and entrained softeners. Solvents from the printing agents and possible softeners from the synthetic foil are thus prevented from migrating into the adhesive means, so that the properties of the adhesive means are not thereby affected.

A particularly effective protection of the adhesive means is provided by a preferred embodiment of the synthetic foil according to the invention, which is characterized in that the barrier layer comprises an at least practically vapour-tight layer. Particles or softeners released from the solution cannot therefore also migrate through such a vapour-tight layer by means of diffusion.

An effective vapour-tight separation between the layer for printing and the adhesive means is achieved in a further preferred embodiment of the synthetic foil according to the invention which is characterized in that the at least practically vapour-tight layer is at least 30 microns thick. At such a thickness the vapour-tight layer is in practice more than sufficient as a barrier with common solvents, both for particles from the solvent and for possible softeners from the layer for printing.

A further preferred embodiment of the synthetic foil of the present invention has the feature that the barrier layer is coated to the layer for printing by means of a coating adhesive. Coating is found to be a highly suitable manner of connecting the barrier layer to the layer for printing. The layers can be connected to each other quickly, accurately and without creases and folds, which enhances the aesthetic value of the synthetic foil. A further preferred embodiment of the synthetic foil of the present invention herein has the feature that the coating adhesive is selected from a group of glues which are at least almost insensitive to solvents, in particular two-component adhesive such as a two-component polyester glue and a two-component polyurethane glue. Such two-component glues are practically insensitive to solvents and will therefore not be adversely affected by solvents and softeners from the carrier.

For a relatively simple connection of the layer for printing to the barrier layer, a particular embodiment of the synthetic foil of the invention has the feature that the barrier layer is connected to the layer for printing by means of a hot-melt adhesive, in particular a reactivatable hot-melt adhesive, more in particular one chosen from a group comprising a polyamide glue, a polyethylene glue and a polypropylene glue, as well as multi-component combinations thereof. Such hot-melt adhesives can be arranged on the barrier layer as a dry film and then activated by heating for the purpose of curing. The layer for printing can hereby be arranged at any random moment without a protective foil being required to prevent the glue layer adhering to surfaces other than those intended.

The layer for printing is preferably suitable for a variety of applications. In particular cases prints are shown outdoors, for instance in the advertising industry, whereby a synthetic foil must be able to withstand changing weather conditions such as rain and bright sunlight. A further preferred embodiment of the synthetic foil of the present invention therefore has the feature that the synthetic foil comprises a PVC foil. Such a PVC foil can be printed with common printing inks such as for instance ink, paint, toner or other means with which graphic images, texts and other printing can be printed, but is particularly suitable for solvent-borne inks, so that such a synthetic foil is particularly suitable for different printing techniques. In addition, such a foil provides a very long lifespan and weather-resistance due to its physical properties, so that it can be used under diverse conditions.

A further preferred embodiment of the synthetic foil of the present invention has the feature that the adhesive means comprise a self-adhesive glue, in particular an acrylate glue, a silicone glue or a synthetic rubber glue. After being printed, the carrier can hereby be easily and quickly adhered to a surface in durable manner by exerting a suitable pressure force thereon. Owing to the barrier layer these adhesive systems in the synthetic foil according to the invention, although being generally sensitive to solvents and softeners, can nevertheless be applied.

The invention will be further elucidated hereinbelow on the basis of two exemplary embodiments and an associated drawing. In the drawing:
- Figure 1: shows a perspective view of a first exemplary embodiment of a synthetic foil according to the present invention.
- Figure 2: shows a cross-section of a second exemplary embodiment of a synthetic foil according to the present invention.

The shown figures are otherwise purely schematic and not drawn to (the same) scale. Some dimensions in particular may be exaggerated to greater or lesser extent for the sake of clarity. Corresponding parts are designated as far as possible in the figures with the same reference numeral.

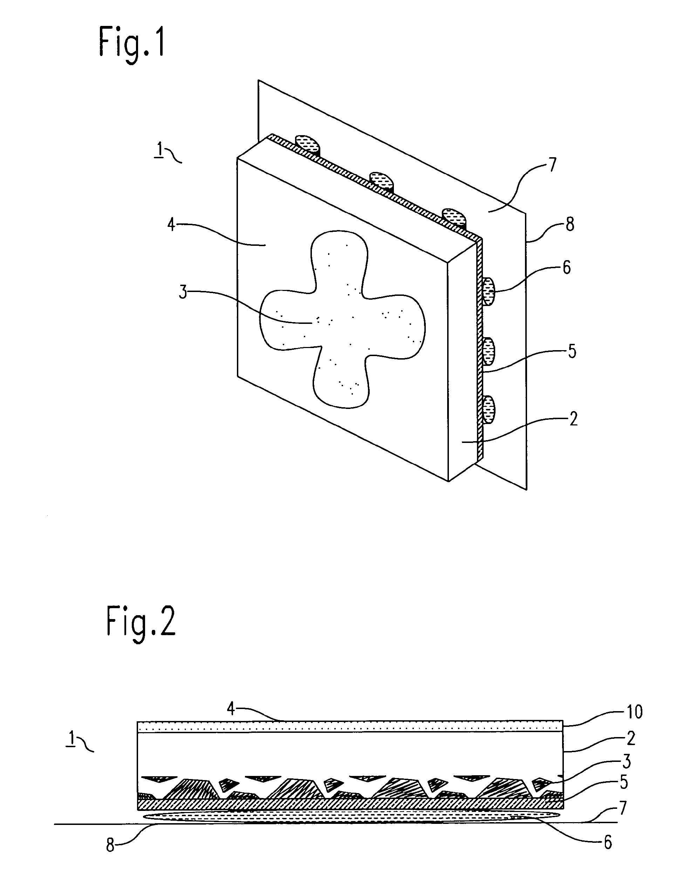

A first exemplary embodiment of a printable synthetic foil according to the invention is shown in figure 1 in a perspective view. On an image side 4 the printable synthetic foil 1 comprises a printable layer 2 in the form of a PVC foil with a thickness of about 50-100 µm. Foil 2 is provided with a desired printing 3 by means of an inkjet printer. The printing ink used herein is solvent-borne and hereby penetrates quickly into the material of printable layer 2. A hot-melt adhesive which is practically insensitive to solvent connects printable layer 2 to a barrier layer 5 which is at least practically impermeable to the solvent. Another suitable connection method is for instance to pour barrier layer 5 over printable layer 2 or to pour printable layer 2 over barrier layer 5. Use is made in this embodiment for the barrier layer of a polyester layer with a thickness of a minimum of about 30 µm. Other suitable materials are for instance polypropylene and polyethylene. On a reverse side 8 remote from image side 4 the barrier layer 5 is provided with adhering means in the form of a self-adhesive acrylate glue layer 6. The self-adhesive glue layer 6 is covered with a protective foil 7 and serves to adhere the synthetic foil to a surface. The above exemplary embodiment thus provides a printable synthetic foil which prevents penetration of solvents from the printing ink into the self-adhesive glue layer. The properties of the acrylate glue layer are hereby preserved.

Figure 2 shows a cross-section of a second embodiment of a printable synthetic foil 1 according to the invention. The synthetic foil comprises a transparent PVC layer as a printable layer 2, which is provided on a reverse side with a printing 3. On the reverse side a light-coloured or white barrier layer 5 is coated against the printable layer, while on the opposite side the printable layer is covered with a transparent polyester layer 10 as protection. In this example the barrier layer 5 also comprises a polyester layer with a minimum thickness of 30 µm, and provides an at least practically vapour-tight barrier against a possible migration of solvents and softeners from PVC layer 3. On a reverse side 8 remote from image side 4 the at least practically vapour-tight polyester layer 5 is provided with adhering means in the form of a self-adhesive acrylate glue layer 6. Glue layer 6 is covered with a protective foil 7 and serves to adhere the synthetic foil to a surface. If desired, a silicone glue or a self-adhesive glue on the basis of synthetic rubber can also be used instead of an acrylate glue. These adhesive systems, which are generally very sensitive to solvents and softeners, can nevertheless be applied owing to the barrier layer incorporated in the synthetic foil.

Although the invention has been further elucidated solely with reference to a few embodiments, it will be apparent that the invention is by no means limited thereto. On the contrary, many other variations and embodiments are possible within the scope of the invention for the person with ordinary skill in the art. In addition to being applied in combination with a PVC foil, the invention can for instance also be applied for other types of synthetic foil in which solvents and possible softeners migrate. Instead of a polyester layer, recourse can also be had to for instance a polypropylene layer, a polyethylene layer or a polyamide layer for the barrier layer.

## Claims

1. Printable synthetic foil comprising a layer for printing and with adhesive means on a reverse side for an optionally permanent adhesion to a surface, **characterized in that** a barrier layer is provided between the layer for printing and the adhesive means, wherein the barrier layer comprises a polymer layer chosen from a group of a polyester layer, a polyamide layer, a polyethylene layer and a polypropylene layer.

2. Synthetic foil as claimed in claim 1, **characterized in that** the barrier layer is an at least practically vapour-tight layer.

3. Synthetic foil as claimed in claim 2, **characterized in that** the at least practically vapour-tight layer is at least 30 microns thick.

4. Synthetic foil as claimed in one or more of the foregoing claims, **characterized in that** the barrier layer is coated to the layer for printing by means of a coating adhesive.

5. Synthetic foil as claimed in claim 4, **characterized in that** the coating adhesive is selected from a group of glues which are at least almost insensitive to solvents, in particular two-component glue such as a two-component polyester glue and a two-component polyurethane glue.

6. Synthetic foil as claimed in one or more of the claims 1-3, **characterized in that** the barrier layer is connected to the layer for printing by means of a hot-melt adhesive, in particular a reactivatable hot-melt adhesive, more in particular one chosen from a group comprising a polyamide glue, a polyethylene glue and a polypropylene glue, as well as multi-component combinations thereof.

7. Synthetic foil as claimed in one or more of the foregoing claims, **characterized in that** the synthetic foil comprises a PVC foil.

8. Synthetic foil as claimed in one or more of the foregoing claims, **characterized in that** the adhesive means comprise a self-adhesive glue, in particular an acrylate glue, a silicone glue or a synthetic rubber glue.
